# EUROPEAN PATENT SPECIFICATION

(11) **EP 3 448 803 B1**
(45) Date of publication and mention of the grant of the patent: **12.07.2023**
(21) Application number: 17718914.9
(22) Date of filing: 24.04.2017
(51) Int. Cl.: C01B 3/04

(54) **AMMONIA DISSOCIATION BY USE OF INDUCTIVE HEATING**
AMMONIAKDISSOZIATION DURCH VERWENDUNG VON INDUKTIVER ERWÄRMUNG
DISSOCIATION DE L'AMMONIAC PAR L'UTILISATION DU CHAUFFAGE INDUCTIF

(30) Priority: 26.04.2016 DK 201600244
(43) Date of publication of application: 06.03.2019
(73) Proprietor: Topsoe A/S, 2800 Kgs. Lyngby (DK)
(72) Inventor: HØJLUND NIELSEN, Poul Erik, DK-3480 Fredensborg (DK); HANSEN, John Bøgild, 3050 Sletten Humlebæk (DK); MORTENSEN, Peter Mølgaard, 4000 Roskilde (DK)
(74) Representative: Topsoe A/S
(86) International application number: PCT/EP2017/059596
(87) International publication number: WO 2017/186614

(56) References cited:
- WO-A1-99/01212
- WO-A1-2007/104554
- WO-A2-2009/098452
- JP-A- 2013 111 538

## Description

This invention belongs to the field of energy storage. More specifically, the present invention relates to means for energy storage employing ammonia dissociation by use of inductive heating and synthesis. Hydrogen production from ammonia can be performed through endothermic splitting of the ammonia. This concept can be used for small-scale hydrogen production.

When hydrogen is reacted with nitrogen in the presence of a catalyst under high temperature and pressure, the reaction goes forward releasing a large amount of energy as practiced in industries using the Haber-Bosch process. The heat released by this reaction can be converted into steam, and power can be generated using steam cycle. The resulting ammonia can further be heated, in the presence of a catalyst, by external heat due to the endothermic nature of the reaction and then split into hydrogen and nitrogen. However, such heat can be supplied only from external sources. Ammonia is a potential source of energy to substitute fossil fuels. However, such ammonia is currently synthesized using hydrocarbons, such as oil and gas. The source of hydrogen is from synthesis gas resulting from steam reforming of a hydrocarbon. Hydrogen can also be derived from water using electrolysis using renewable energy source. In both cases, renewable energy is the key, without which no hydrogen can be produced without a hydrocarbon or external heat being supplied for splitting ammonia. Ammonia can also be split into hydrogen and nitrogen using external heat. The resulting hydrogen can be used to generate power using a fuel cell.

In an ammonia-based thermochemical energy storage (TES) system, which was developed in Australia, liquid ammonia (NH₃) is dissociated in an energy storing (endothermic) chemical reactor as it absorbs solar thermal energy. At a later time, the gaseous products hydrogen (H₂) and nitrogen (N₂) are reacted on demand in an energy releasing (exothermic) reactor to re-synthesize ammonia and recover the stored solar energy.

Because the solar energy is stored in a chemical form at ambient temperature, there are no energy losses during storage regardless of the length of time that the reactants remain in storage. The reactors are packed with standard commercial catalyst materials to promote both reactions. Counter-flow heat exchangers transfer heat between in-going and out-going reactants at each reactor to use the energy most effectively.

In Int. J. of Energy Research 20 (11), 965-978 (1996), the application of the ammonia dissociation reaction to the TES of solar energy is reported. A two-dimensional pseudo-homogeneous packed-bed catalytic reactor model was adapted to predict the behavior of ammonia dissociation and synthesis reactors. A series of steady-state experiments, with a high-pressure ammonia dissociation device operated in an 'open-loop' experimental configuration, were used to verify the model. These experiments involved operating pressures up to 16 MPa and temperatures up to 720°C. The results indicated an activation energy of 192 kJ mol⁻¹ for the nickel-on-alumina dissociation catalyst used. The experiments also indicated that the experimental configuration is suitable for development into a 'closed-loop' energy storage experiment operating at a power level of approximately 1kW.

However, TES presents numerous challenges, such as adequate reaction kinetics, sufficiently low-cost catalysts, and sufficient reaction yield at TES operating temperatures and pressures. Thermochemical energy storage must also be reversible. Thus, there is a need for a simple thermal energy storage system that is efficient, durable, low-cost and easy to implement.

JP 2013111538 A describes a process where methanol enters a gas composition reactor, which comprises catalyst metal particles. The reactor is heated by induction heating provided through a coil, which surrounds the reactor. The catalyst metal particles contain metal particles of ferromagnetic material and metals such as Fe, Co, Fe-Co alloys, Fe-Ni alloys or Fe-Cr-Co alloys.

WO 2007/104554 describes various catalysts for decomposition of ammonia, some of them including Fe and/or Co, and it specifically describes the use of magnetite in the decomposition.

It has now turned out that induction heating is a good candidate to supply the necessary heat for the ammonia dissociation reaction. More specifically, the ammonia synthesis catalyst is ferromagnetic, and as such it can be heated by low frequency inductive heating. This heat can be used for the endothermic ammonia splitting or dissociation, where ammonia dissociates into its constituents, such as hydrogen and nitrogen according to the reaction

2NH₃ <-> N₂ + 3H₂; ΔH = 46.22 kJ·mol⁻¹

This reaction proceeds at a temperature around 500°C in the presence of a conventional catalyst.

The formed synthesis gas can either be sent to storage, or the hydrogen can be used for other purposes. Storage of the gas can e.g. be done in caverns, which has been practiced for natural gas storage.

Recovery of energy takes place through ammonia synthesis:

N₂ + 3H₂ <-> 2NH₃

This is conventional technology, and the energy produced is recovered as high pressure steam or superheated steam.

The reactor for ammonia splitting is a reactor loaded with a conventional ammonia catalyst, primarily composed of Fe. Since, as mentioned above, the ammonia catalyst is ferromagnetic, it can be heated by inductive heating.

Thus, the present invention relates to a process for carrying out ammonia dissociation by use of inductive heating, as recited in appended claim 1. According to the invention, inductive heating is obtained by surrounding the catalyst bed with an induction coil, which is placed inside the reactor wall. By applying an alternating current to the induction coil, an alternating induction field is induced in the Fe-based catalyst. Thereby heat is supplied for the endothermic reaction.

Induction heating is the process of heating an electrically conducting object (usually a metal) by magnetic induction, through heat generated in the object by eddy currents (also called Foucault currents, which are loops of electrical current induced within conductors by a changing magnetic field in the conductor, due to Faraday's law of induction) and/or hysteresis loss. Eddy currents flow in closed loops within conductors, in planes perpendicular to the magnetic field.

An induction heater consists of an electromagnet and an electronic oscillator which passes a high-frequency alternating current (AC) through the electromagnet. The rapidly alternating magnetic field penetrates the object, whereby electric currents inside the conductor called eddy currents are generated. The eddy currents flowing through the resistance of the material will heat it by Joule heating. Eddy current heating is also denoted ohmic heating. In ferromagnetic (and ferrimagnetic and antiferromagnetic) materials like iron, heat may alternatively or additionally be generated by magnetic hysteresis losses. This is denoted ferromagnetic heating. The frequency of the current used depends on the object size, material type, coupling (between the induction coil and the object to be heated) and the penetration depth. An induction coil comprising a conductor bent into the form of a plurality of loops or windings is an example of an electromagnet.

Inductive heating is generally carried out using an alternating current, which is passed through a coil. The subject to be heated is placed inside the coil. This procedure is, however, not very energy efficient as such, because the magnetic field generated by the coil will continue also outside the coil. While this drawback may be avoided by shaping the coil as a torus, there will still be a loss due to the resistance in the coil, i.e. the ohmic heat, which normally will be lost for the process.

It has now turned out that it is possible to establish a much more energy efficient approach by placing the coil within the reactor and placing the catalyst inside the coil. More specifically, the catalyst bed is surrounded by the induction coil, which is placed inside the reactor wall. This way, the ohmic heat will not be lost for the process, and provided that the pressure shell is based on iron with a low hysteresis, or alternatively that the pressure shell is coated on the inside with such iron type, the magnetic field generated by the coil will not be able to penetrate out of the reactor. At very high temperatures, the reactor may be walled up and possibly cooled to protect it by keeping the temperature below the Curie temperature, which is the temperature at which certain materials lose their permanent magnetic properties, to be replaced by induced magnetism. Typically, the coil can be made of Kanthal-type (Fe-Cr-Al alloy) wire, which resists reducing gases.

For ferromagnetic materials, induction heating takes place by both ferromagnetic/hysteresis heating and ohmic/eddy current heating. An estimation of the hysteresis heating is given by the formula: P=**∮*BdH****f, where P denotes the heating power transferred to the material, B the magnetic flux density, dH the change in the magnetic field strength, and f the frequency of the alternating magnetic field. Thus, the heating power transferred to the material by hysteresis heating is the area of the hysteresis curve multiplied by the frequency of the alternating magnetic field. An estimation of the ohmic/eddy current heating is given by the formula P=**π**/20·***B***ₘ²·*l*²·**σ·*f***², where P denotes the heating power transferred to the material, Bₘ is the magnetic flux density induced in the material, l is a characteristic length of the material, **σ** is the conductivity of the material and f is the frequency of the alternating magnetic field. Thus, the heating power transferred to the material by eddy current heating is proportional to the magnetic flux density squared as well as the frequency of the alternating magnetic field squared. Paramagnetic materials have a very small magnetic flux density B when subjected to an alternating magnetic field compared to ferromagnetic materials. Therefore, ferromagnetic materials are much more susceptible to induction heating than non-ferromagnetic materials, and either alternating magnetic fields of a lower frequency are usable for ferromagnetic materials compared to nonferro-magnetic materials, or a lower frequency of the alternating magnetic field may be used. Generating a high-frequency magnetic field is relatively expensive energetically, so the use of a lower frequency of the magnetic field provides for cheaper heating of the material. Here, a high-frequency magnetic field is meant to be a field having a frequency in the MHz range, maybe from to 0.1 or 0.5 MHz and upwards.

A ferromagnetic material provides for further advantages, such as the following:
A ferromagnetic material absorbs a high proportion of the magnetic field, thereby making the need for shielding less important or even superfluous.

Heating of ferromagnetic materials is relatively faster and cheaper than heating of non-ferromagnetic materials. A ferromagnetic material has an inherent or intrinsic maximum temperature of heating, viz. the Curie temperature. Therefore, the use of a catalyst material which is ferromagnetic ensures that an endothermic chemical reaction is not heated beyond a specific temperature, viz. the Curie temperature. Thus, it is ensured that the chemical reaction will not run out of control.

The coil is placed so that it has a direct electrical contact to the catalyst. In this case, an additional ohmic heating of the catalyst will take place. In addition, there will be no need for electrical isolation of the coil, as recited in appended claim 4.

At present, ammonia splitting or dissociation is done industrially in a few plants, typically employing catalysts which are magnetic with a Curie temperature above 700°C. Hydrogen derived from anhydrous liquid ammonia offers an alternative to conventional methods of obtaining pure hydrogen for small-scale use. Thus, hydrogen from ammonia dissociation would be a preferred option for the smallest plant sizes where it is competitive with hydrogen prepared via natural gas of comparable purity. The dissociation rate depends on temperature, pressure and the catalysts being used. For an almost complete decomposition of ammonia, the temperature is approximately 430°C at atmospheric pressure.

Typical catalysts used in ammonia splitting are applicant's KM-1 and DNK-2R catalysts, of which the first one, as recited in appended claim 2, is a promoted iron catalyst with 94 wt% Fe₃O₄, temperature range 360-550°C, and the second one, as recited in appended claim 3, is a triple-promoted iron-cobalt catalyst with 22-26 wt% Co, 22-26 wt% Fe, 1-2 wt% promoter and the balance being Al₂O₃, temperature range 400-700°C.

A reactor for carrying out the process of the invention will typically consist of a cooled pressure shell with an internal bricked wall. In the catalyst bed close to the bricked wall, one or more coils of wire is/are placed for inductive and resistance heating of the catalyst bed. The coil(s) can be made of Kanthal-type wire, copper wire, constantan wire and wire made of an iron-chromium-aluminium (FeCrAl) alloy, an alloy of copper, manganese and nickel and combinations thereof. Preferably the coils are made of Kanthal-type wire.

During operation, the heat for driving the reaction is provided by means of electric power. Otherwise, efficient isolation ensures a minimum heat loss.

Ammonia dissociation is typically taking place at temperatures from 500 to 650°C and at pressures from 5 to 30 MPa.

The ammonia synthesis is carried out using, as example, a Topsoe standard loop for inert-free gases with recovery of the heat as high pressure steam.

Waste heat can be used for pre-heating and further, in domestic areas, also for district heating.

## Claims

1. A process for carrying out ammonia dissociation in a reactor for ammonia splitting according to the endothermic reaction
2NH₃ <-> N₂ + 3H₂
catalyzed by a ferromagnetic catalyst, wherein inductive heating is used to supply the necessary heat, wherein the catalyst is based on Fe and/or Co, and wherein the inductive heating is obtained by surrounding the catalyst bed with an induction coil to which an alternating current is applied, which is placed inside the reactor wall and has direct electrical contact to the catalyst.

2. Process according to claim 1, wherein the catalyst is based on Fe and/or Co, and wherein the catalyst is a promoted iron catalyst with 94 wt% Fe₃O₄.

3. Process according to claim 1, wherein the catalyst is based on Fe and/or Co, and wherein the catalyst is a triple-promoted iron-cobalt catalyst with 22-26 wt% Co, 22-26 wt% Fe, 1-2 wt% promoter and the balance being Al₂O₃.

4. Process according to claim 1, wherein the coil is unisolated.

## Patentansprüche

1. Verfahren zur Durchführung einer Ammoniak-Dissoziation in einem Reaktor zur Ammoniak-Spaltung nach der endothermen Reaktion
2NH₃ <-> N₂ + 3H₂
katalysiert durch einen ferromagnetischen Katalysator, wobei induktive Erwärmung verwendet wird, um die notwendige Wärme zu liefern, wobei der Katalysator auf Fe und/oder Co basiert, und wobei die induktive Erwärmung erhalten wird, indem das Katalysatorbett mit einer Induktionsspule umgeben ist, an die ein Wechselstrom angelegt wird, die innerhalb der Reaktorwand angeordnet ist und direkten elektrischen Kontakt mit dem Katalysator hat.

2. Verfahren gemäß Anspruch 1, wobei der Katalysator auf Fe und/oder Co basiert und wobei der Katalysator ein promotierter Eisenkatalysator mit 94 Gew.-% Fe₃O₄ ist.

3. Verfahren gemäß Anspruch 1, wobei der Katalysator auf Fe und/oder Co basiert und wobei der Katalysator ein dreifach promotierter Eisen-Kobalt-Katalysator mit 22-26 Gew.-% Co, 22-26 Gew.-% Fe, 1-2 Gew.-% Promotor ist und der Rest Al₂O₃ ist.

4. Verfahren gemäß Anspruch 1, wobei die Spule nicht isoliert ist.

## Revendications

1. Procédé réalisant la dissociation de l'ammoniac dans un réacteur de séparation de l'ammoniac selon la réaction endothermique
2NH₃ <-> N₂ + 3H₂
catalysée par un catalyseur ferromagnétique, dans lequel le chauffage inductif est utilisé pour fournir la chaleur nécessaire, dans lequel le catalyseur est à base de Fe et/ou de Co, et dans lequel le chauffage inductif est obtenu en entourant le lit de catalyseur d'une bobine d'induction à laquelle un courant alternatif est appliqué, laquelle est placée à l'intérieur de la paroi de réacteur et a un contact électrique direct avec le catalyseur.

2. Procédé selon la revendication 1, dans lequel le catalyseur est à base de Fe et/ou de Co, et dans lequel le catalyseur est un catalyseur de fer promu présentant 94% en poids de Fe₃O₄.

3. Procédé selon la revendication 1, dans lequel le catalyseur est à base de Fe et/ou de Co, et dans lequel le catalyseur est un catalyseur de fer-cobalt triplement promu présentant 22-26% en poids de Co, 22-26% en poids de Fe, 1-2% en poids de promoteur, le reste étant de l'Al₂O₃.

4. Procédé selon la revendication 1, dans lequel la bobine n'est pas isolée.
